# EUROPEAN PATENT APPLICATION

(11) **EP 4 544 969 A1**
(43) Date of publication of application: **30.04.2025**
(21) Application number: 24152962.7
(22) Date of filing: 19.01.2024
(51) Int. Cl.: A47J 37/08, A47J 43/18

(54) **RACK AND BARBECUE GRILL**

(30) Priority: 26.10.2023 CN 202322898754 U
(71) Applicant: Haohong Electric Technology (Hubei) Co., Ltd., Huanggang, Hubei 438000 (CN)
(72) Inventor: WANG, Min, Huanggang, Hubei 438300 (CN)
(74) Representative: Bianchetti & Minoja with Trevisan & Cuonzo IPS SRL

(57) **Abstract**

Disclosed are a rack and a barbecue grill. The rack includes a limit plate and two supports connected with the limit plate. The limit plate is provided with a plurality of limit notch grooves, and the plurality of the limit notch grooves are arranged along a length direction of the limit plate; the limit notch grooves are configured to pass through the limit plate. The present application aims to improve the utilization of space by gathering some small handle-shaped irregular foods by using a rack.

## Description

### TECHNICAL FIELD

The present application relates to the technical field of food quality preservation, and in particular to a rack and a barbecue grill.

### BACKGROUND

Barbecue is a popular activity during outdoor activities.

Considering that the cooked foods idle for a long time will easily get cool, and because of various outdoor preparation things, people playing outdoor together may not be able to gather together to eat barbecue immediately, so the food and rack will be placed in the oven to prevent foods from becoming cool. However, the applicant finds that the type of the rack is single, and generally only the rack is used to place a variety of foods, including but not limited to a variety of meat skewers, large meat chops and chicken legs, etc. And various foods are piled up on each other on the rack. Because some foods are irregular in shape, the actual space occupied by the foods is much larger than the space required by the actual volume of foods. There is a problem that the utilization efficiency of the rack is not high.

### SUMMARY

The main purpose of the present application is to provide a rack, which aims to improve the utilization of space by gathering some small handle-shaped irregular foods by using a rack.

In order to achieve the above purpose, the present application provides a rack including a limit plate and two supports connected with the limit plate; the limit plate is provided with a plurality of limit notch grooves, and the plurality of the limit notch grooves are arranged along a length direction of the limit plate; the limit notch grooves are configured to pass through the limit plate, and configured to limit and stabilize food.

In an embodiment of the present application, a groove width of any of the limit notch grooves is configured to increase uniformly toward a notch of the limit notch grooves along a width direction of the limit plate.

In an embodiment of the present application, the limit plate is provided with a limit clamping tooth, and the limit clamping tooth is spaced on a side wall of the limit notch grooves.

In an embodiment of the present application, the limit plate is also provided with a plurality of limit holes, each of the limit holes is configured to correspond to one limit notch groove and is arranged on one side of the limit notch groove away from the limit notch groove, and the limit hole is communicated with the limit notch groove.

In an embodiment of the present application, the rack is provided with a rotating component arranged at both ends of the limit plate along the length direction of the limit plate, and the rotating component is provided with rotating holes; an end of the support is provided with rotating rods, and each rotating rod is inserted into each rotating hole; an end of the support portion away from the limiting plate is configured to form a free end; and the rack has a storage state and a support state; in the storage state, the free end is attached to the limit plate; in the support state, the free end is away from the limit plate.

In an embodiment of the present application, the limit plate is provided with a limit component, the limit component is connected with the rotating component and is provided with a limit space to accommodate at least part of the support; and in the support state, the support is abutted against the limit component.

In an embodiment of the present application, the rack further includes a rib frame that is independently arranged on the rack; the rib frame is provided with a bent rib rod and a connecting rod, and the bent rib rod is provided with two sets of bending components; one set of the bending components comprises a first bending component and a second bending component; the first bending component and the second bending component are arranged at intervals at a non-end segment of the bend rib rod, and the two sets of bending components are symmetrically arranged on the bend rib rod; the bend rib rod is configured to form a first limit component, a second limit component, and a connecting component, and the first limit component is parallel to the second limit component; and a plurality of bent rib rods are arranged at intervals on the connecting rod, and a clamping space is formed between any two adjacent bent rib rods.

In an embodiment of the present application, the bend rib rod also includes a third bending component close to an end of the bend rib rod, and the third bending component is configured to bend the end of the bend rib rod towards the first limit component.

The present application also provides a barbecue grill, the barbecue grill includes a thermal insulation inner cavity formed by an enclosure of a housing and the rack; the rack is arranged in the thermal insulation inner cavity, and the housing has a first state and a second state; in the first state, the housing is configured to cover the thermal insulation inner cavity; in the second state, the housing is configured to reveal the thermal insulation inner cavity.

In an embodiment of the present application, the barbecue grill further includes an oil pan; the oil pan is arranged in the thermal insulation inner cavity, and the rack is located above an orthograph of the oil pan; and/or a thermal insulation net; the thermal insulation net is arranged in the thermal insulation inner cavity, and the thermal insulation net is located above the orthograph of the oil pan.

The technical solution of the present application provides a rack including a limit plate and two supports connected with the limit plate; the limit plate is provided with a plurality of limit notch grooves, and the plurality of the limit notch grooves are arranged along a length direction of the limit plate; the limit notch grooves are configured to pass through the limit plate, and configured to stuck small irregular food with handles and make the food hang. Each irregular food is placed independently of each other, and a plurality of foods can be placed in one groove. Food of different lengths and shapes can be staggered into the same limit notch groove to make full use of the space of the rack and improve its utilization efficiency. Besides, the food in different limit notch grooves can be brushed with different seasonings to avoid flavors mixing.

### BRIEF DESCRIPTION OF THE DRAWINGS

In order to more clearly illustrate the technical solution in the embodiments of the present application or in the related art, the accompanying drawings used in the embodiments or the related art will be briefly described below. Obviously, the accompanying drawings in the following description are only some embodiments of the present application. For those skilled in the art, other drawings can be obtained according to the structures shown in these drawings without creative efforts.
FIG. 1 is a stereoscopic structural diagram of a rack according to an embodiment of the present application;
FIG. 2 is a stereoscopic structural diagram of a limit plate of the rack according to an embodiment of the present application;
FIG. 3 is a stereoscopic structural diagram of a bent rib rod according to an embodiment of the present application; and
FIG. 4 is a stereoscopic structural diagram of a barbecue grill according to an embodiment of the present application.

Description of reference numerals:

| Number | Name | Number | Name |
|---|---|---|---|
| 10 | Rib frame | 202 | Support |
| 101 | Bent rib rod | 20a | Limit notch groove |
| 102 | Connecting rod | 203 | Limit clamping tooth |
| 103 | First bending component | 20b | Limit hole |
| 104 | Second bending component | 204 | Rotating component |
| 105 | Third bending component | 20c | Rotating hole |
| 106 | First limit component | 205 | Rotating rod |
| 107 | Second limit component | 206 | Limit component |
| 108 | Connecting component | 206c | Limit space |
| 20 | Rack | 1000 | Barbecue grill |
| 201 | Limit plate | 1000A | Thermal insulation inner cavity |
| 30 | Thermal insulation net | 40 | Oil pan |
| 50 | Net | | |

The realization of the purpose, functional characteristics, and advantages of the present application will be further described in conjunction with the embodiments and with reference to the accompanying drawings.

### DETAILED DESCRIPTION OF THE EMBODIMENTS

The technical solutions in the embodiments of the present application will be described clearly and completely below with reference to the accompanying drawings in the embodiments of the present application. It is obvious that the described embodiments are only some rather than all of the embodiments of the present application. All other embodiments obtained by those skilled in the art based on the embodiments of the present application without creative efforts shall fall within the scope of the present application.

It should be noted that if there is a directional indication (such as up, down, left, right, front, rear•••) in the embodiments of the present application, the directional indication is only used to explain the relative positional relationship, movement, etc. of the components in a certain posture (as shown in the drawings). If the specific posture changes, the directional indication will change accordingly.

It should be noted that, it there are descriptions such as "first" and "second" in the embodiments of the present application, the descriptions such as "first" and "second" are merely for descriptive purposes, and cannot be understood as indicating or implying relative importance or implicitly indicating the number of the indicated technical features. Therefore, the feature defined with "first" or "second" can explicitly or implicitly include at least one such feature. In addition, the meaning of "and/or" in the entire text is to include three parallel solutions, taking "A and/or B" as an example, including A solution, or B solution, or solutions that both A and B meet. In addition, the technical solutions between the various embodiments can be combined with each other, but the combination must be based on the realization of those skilled in the art. When the combination of technical solutions is contradictory or cannot be achieved, it should be considered that such combination of technical solutions does not exist, and is not within the scope of the present application.

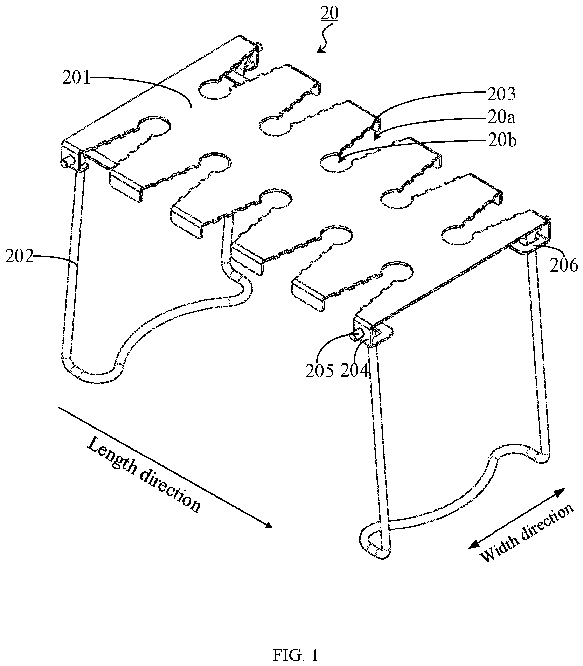

The present application provides a rack 20 including a limit plate 201 and two supports 202. Referring to FIG. 1, the limit plate 201 is connected with the supports 202; the limit plate 201 is provided with a plurality of limit notch grooves 20a, and the plurality of the limit notch grooves 20a are symmetrically arranged along a length direction of the limit plate 201. The limit notch grooves 20a are configured to pass through the limit plate 201, and configured to limit and stabilize food.

In the technical solution of the present application, the rack 20 is configured to place chicken legs. The rack 20 includes a limit plate 201 and two supports 202 connected with the limit plate 201; the limit plate 201 is provided with a plurality of limit notch grooves 20a, and the plurality of the limit notch grooves 20a are symmetrically arranged along a length direction of the limit plate 201. The limit notch grooves 20a are configured to pass through the limit plate 201, and configured to stuck small irregular food with handle and make the food hang. Each irregular food is placed independently of each other, and a plurality of foods can be placed in one groove. Food of different lengths and shapes can be staggered into the same limit notch groove 20a to make full use of the space of the rack 20 and improve its utilization efficiency. Besides, the food in different limit notch grooves 20a can be brushed with different seasonings to avoid flavors mixing.

In the present embodiment, the rack 20 includes a limit plate 201 and two supports 202. The support 202 is composed of two support rods, and the bottoms of the support rods are connected by a curved rod; of course, they can also be connected by a straight rod. To a certain extent, the curved rod can increase the contact area between the rack 20 and the plane where the rack 20 is placed, increase the friction, and improve the placement stability of the rack 20. Both ends of the limit plate 201 are respectively connected to one support 202 to form a stable support effect. The limit plate 201 is provided with ten limit notch grooves 20a, and any limit notch groove 20a corresponds to another limit notch groove 20a. Five groups of the limit notch grooves are formed symmetrically along the length direction of the limit plate 201. Of course, the specific design of the limit notch groove 20a can be adaptively arranged according to actual needs, for example, in another embodiment, it can be ten limit notch grooves 20a arranged in a row on the limit plate 201 along the length direction of the limit plate 201. It should be noted that the length direction is the extension direction of the longest side of the limit plate 201. And in another embodiment, the surface of the limit plate 201 is square-shaped, the extension direction of either side is the length direction. Because the limit notch grooves 20a are configured to pass through the limit plate 201, the chicken legs can be stuck in the grooves and hung. In order to make full use of the space, a plurality of chicken legs can be hung in one limit notch groove 20a, thereby improving the space utilization of the entire rack 20. It is understood that the support 202 and the limit plate 201 can be connected through welding and rotation, so that the rack 20 can be organized. The shape and size of the limit notch groove 20a can be designed according to actual needs.

In an embodiment of the present application, referring to FIG. 1, a groove width of any of the limit notch grooves 20a is configured to increase uniformly toward a notch of the limit notch grooves 20a along a width direction of the limit plate 201.

In the present embodiment, the groove width of the limit notch groove 20a is configured to increase uniformly toward a notch of the limit notch grooves 20a along a width direction of the limit plate 201. It should be noted that the width direction is the extension direction perpendicular to the length direction of the limit plate 201 in same plane. And in another embodiment, the surface of the limit plate 201 is square, then the extension direction of either side is width direction. A rack 20 with such a design can hang chicken legs of different sizes in one limit notch groove 20a, and arrange them at different positions in the groove according to the size of the root of the chicken legs, further improving the space utilization of the entire rack 20.

In an embodiment of the present application, referring to FIG. 1, the limit plate 201 is provided with a limit clamping tooth 203, and the limit clamping tooth 203 is spaced on a side wall of the limit notch grooves 20a.

In the present embodiment, the limit plate 201 is provided with a plurality of pairs of limit clamping teeth 203, and a plurality of pairs of limit clamping teeth 203 are provided in any limiting notch groove 20a along its length direction. The limit clamping tooth 203 together with the limit plate 201 can stuck the chicken legs to prevent them from falling to achieve an anti-slip effect. It should be understood that the number and the interval of the limit clamping tooth 203 are not limited, and diversified designs can be made to enhance practicality.

In an embodiment of the present application, referring to FIG. 1, the limit plate 201 is also provided with a plurality of limit holes 20b, each of the limit holes 20b is configured to correspond to one limit notch groove 20a and is arranged on one side of the limit notch groove 20a away from the limit notch groove 20a, and the limit hole 20b is communicated with the limit notch groove 20a.

In the present application, the limit plate 201 is also provided with a plurality of limit holes 20b, each of the limit holes 20b is configured to correspond to one limit notch groove 20a and is arranged on one side of the limit notch groove 20a away from the limit notch groove 20a, and the limit hole 20b is in communication with the limit notch groove 20a. A plurality of limit holes 20b can accommodate chicken legs of the same type. Besides, the aperture of the limit hole 20b can be larger than the maximum width of the limit notch groove 20a, can also be smaller than the minimum width, or between the two, which is not limited.

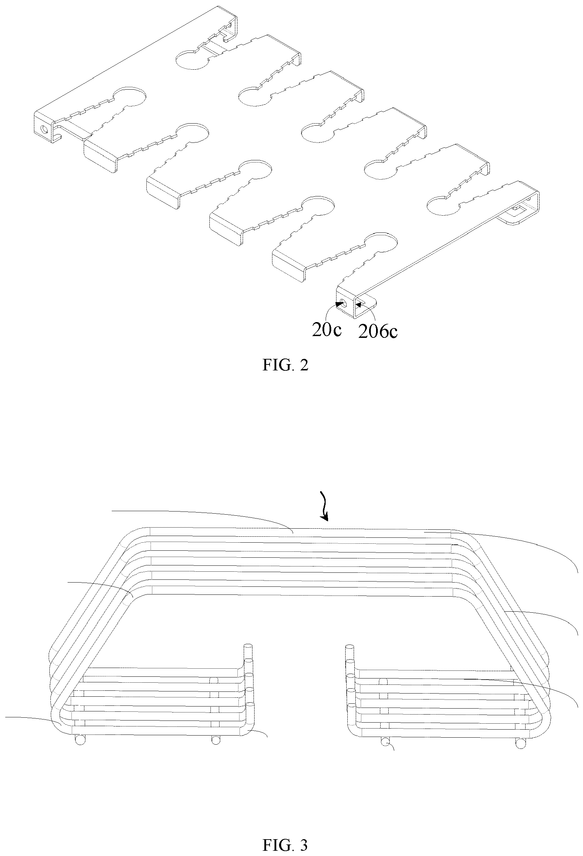

In an embodiment of the present application, referring to FIG. 2, the rack 20 is provided with a rotating component 204 arranged at both ends of the limit plate 201 along the length direction of the limit plate 201, and the rotating component 204 is provided with rotating holes 20c; an end of the support 202 is provided with rotating rods 205, and each rotating rod 205 is inserted into each rotating hole 20c; an end of the support 202 away from the limit plate 201 is configured to form a free end.

In the present application, the support 202 is rotationally connected to the limit plate 201. The rack 20 is provided with a rotating component 204 arranged at both ends of the limit plate 201 along the length direction of the limit plate 201, and the rotating component 204 is provided with rotating holes 20c; an end of the support 202 is provided with rotating rods 205, and each rotating rod 205 is inserted into each rotating hole 20c; an end of the support 202 away from the limit plate 201 is configured to form a free end. The rotatably connected rack 20 has a storage state and a support state; in the storage state, the free end is attached to the limit plate 201; in the support state, the free end is away from the limit plate 201. In this way, when the rack 20 is not in use, it can be folded into a storage state, thereby reducing space occupation and making it convenient to carry.

In an embodiment of the present application, referring to FIG. 2, the limit plate 201 is provided with a limit component 206, the limit component 206 is connected with the rotating component 204 and is provided with a limit space 206c to accommodate at least part of the support 202.

In the present application, the limit plate 201 is provided with a limit component 206. The limit component 206 can be formed with the rotating component 204 or welded with the rotating component 204. The rotating component 204 is provided with a limit space 206c to accommodate at least part of the support 202. In the support state, the support 202 is abutted against the limit component 206 to prevent the distance between the two free ends from being too large and causing instability when the rack 20 is placed.

In an embodiment of the present application, referring to FIG. 3, the rack 20 further includes a rib frame 10 that is independently arranged with respect to the rack 20. The rib frame 10 is provided with a bent rib rod 101 and a connecting rod 102, and the bent rib rod 101 is provided with two sets of bending components; one set of the bending components includes a first bending component 103 and a second bending component 104; the first bending component 103 and the second bending component 104 are arranged at intervals at a non-end segment of the bend rib rod 101, and the two sets of bending components are symmetrically arranged on the bend rib rod 101; the bend rib rod 101 is configured to form a first limit component 106, a second limit component 107, and a connecting component 108. The first limit component 106 is parallel to the second limit component 107; and a plurality of bent rib rods 101 are arranged at intervals on the connecting rod 102, and a clamping space is formed between any two adjacent bent rib rods 101.

In the present application, the rib frame 10 is welded by five bent rib rods 101 and four connecting rods 102, each bent rib rod 101 is provided with two sets of bending components. The two sets of bending components are symmetrically arranged along the central longitudinal axis of the bent rib rod 101, and any set of the bending components includes a first bending component 103 and a second bending component 104. The bending directions of the first bending component 103 and the second bending component 104 are consistent, and the bending angles are complementary. The four bending components make one bent rib rod 101 form a five-section structure. Since the two sets of bending components are symmetrically arranged, both sides of each bent rib rod 101 along its central longitudinal axis can be regarded as a three-section structure. The three-section structure includes a first limit component 106, a second limit component 107 and a connecting component 108. Because the bending angles of the first bending component 103 and the second bending component 104 are complementary, the first limit component 106 is parallel to the second limit component 107, and the connecting component 108 serves to connect and support. The first limit component 106 and the second limit component 107 are designed in parallel in order to reduce a certain amount of occupied space when using the rib frame 10. That is because large lumpy foods such as steaks or pork chops will be limited and clamped in the clamping space formed by two adjacent bent rib rods 101, and the bottom of the large lumpy foods will be supported by the connecting rod 102, while both sides will be blocked by the first limit component 106 and the second limit component 107. The connecting rod 102, the first limit component 106 and the second limit component 107 cooperate with each other to prevent food from falling and enhance the practicality of the rack 20. It can be understood that the number of the bent rib rods 101 and connecting rods 102 provided on the rib frame 10 is not specifically limited, and can be adjusted adaptively to meet actual needs.

In an embodiment of the present application, referring to FIG. 3, the bend rib rod 101 also includes a third bending component 105 close to an end of the bend rib rod 101, and the third bending component 105 is configured to bend the end of the bend rib rod 101 towards the first limit component 106.

In the present application, any bend rib rod 101 is provided with two third bending components 105, and the two third bending components 105 are respectively provided at both ends of the bending rib rod 101. The bending direction of the third bending component 105 is consistent with that of the first bending component 103, but the angle is different. Therefore, the two ends of the bending rib rod 101 are bent toward the first limit component 106. With the third bending component 105, the contact area between the food and the bent rib rod 101 increases. Without additional space occupied by the rib frame 10, the third bending component 105 also improves the stability of food placement and reduces the probability of food falling.

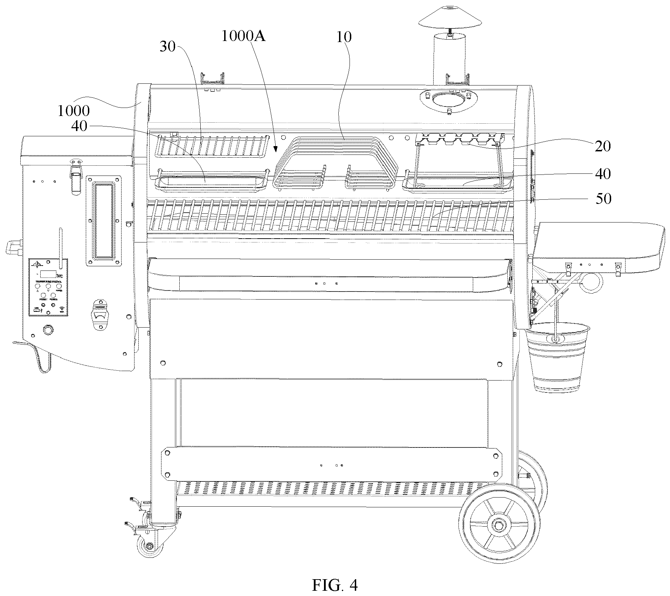

The present application also provides a barbecue grill 1000. Referring to FIG. 4, the barbecue grill 1000 includes a thermal insulation inner cavity 1000A formed by an enclosure of a housing and the rack 20. The rack 20 and the rib frame 10 are arranged in the thermal insulation inner cavity 1000A and are located at the same height. It can be understood that the barbecue grill 1000 is provided with an insertion hole for installing the rib frame 10 on the inner wall of the thermal insulation inner cavity 1000A, and at least part of the connecting rod 102 is inserted into the insertion hole to form a stable structure. The rack 20 can be placed in the thermal insulation inner cavity 1000A through its support 202, or can be placed in the thermal insulation inner cavity 1000A through other fixing structures including but not limited to the aforementioned rod hole structure. The fixing rod used to fix the rack 20 can be adaptively designed according to the appropriate position. The connection method can be welding or using steel wire for bundling, which is a conventional method and will not be specifically explained here. When grilling food, the existing food racks designed for holding chicken legs and steaks are usually placed directly on the barbecue grill's net 50. Once the grilling is completed, the food is then either served directly on the dining table for immediate consumption or stored in other heat-insulating containers for temporary heat preservation. In the present application, when grilling food, first place the chicken legs on the rack 20 and the steaks on the rib frame 10, and then place the rack 20 and the rib frame 10 on the net 50. When the food is grilled, you can either place the food along with the rack 20 and rib frame 10 together in the thermal insulation inner cavity 1000A of the grill 1000, or pre-install the second set of rack 20 and rib frame 10 in the thermal insulation inner cavity 1000A. At this time, you only need to place the grilled food on the rack 20 and the rib frame 10, and there is no need to prepare other heat preservation tableware. Since the rack 20 and the rib frame 10 use separate fixed structures and are arranged in the thermal insulation inner cavity 1000A, direct contact between the food and the net 50 of the barbecue grill 1000 can be avoided, and the food can be kept at a certain distance from the heat source. When the food is grilled, placing the food on the rack 20 and the rib frame 10 away from the heat source can effectively prevent the food from being further dried, thereby affecting the taste of the food. Also, it avoids occupying the grilling area of the net 50 and affecting the grilling process of other foods. It should be understood, the thermal insulation inner cavity 1000A can be equipped with either the rack 20 or the rib frame 10 depending on the specific scenarios. Besides, the housing has a first state and a second state; in the first state, the housing is configured to cover the thermal insulation inner cavity 1000A. When the grill is continuously heating, the food placed on the rack 20 and the rib frame 10 will not get cold or taste bad. In the second state, the housing is configured to reveal the thermal insulation inner cavity 1000A, so the food can be taken out for consumption. The specific structure of the rack 20 refers to the above-mentioned embodiments. Since the grill 1000 adopts all the technical solutions of all the above-mentioned embodiments, it has at least all the beneficial effects brought by the technical solutions of the above-mentioned embodiments, which will not be described again here.

In an embodiment of the present application, referring to FIG. 4, the barbecue grill 1000 includes an oil pan 40 which is arranged in the thermal insulation inner cavity 1000A. The rack 20 is located vertically above the oil pan 40.

The barbecue grill 1000 further includes a thermal insulation net 30 which is arranged in the thermal insulation inner cavity 1000A. The thermal insulation net 30 is located vertically above the oil pan 40.

In the present application, the barbecue grill 1000 further includes a thermal insulation net 30. The oil pans 40 are set under the vertical projection of the thermal insulation net 30, the rack 20 and the rib frame 10 to receive grease, so as to prevent the grease from the food on the thermal insulation net 30, the rack 20 and the rib frame 10 from dripping onto the heating structure of the grill, causing the risk of backfire and safety accidents. The oil pan 40 can be fixed through the above-mentioned rod hole structure. A plurality of fixed rod groups are provided in the thermal insulation inner cavity 1000A, each group includes two fixed rods, and each fixed rod is inserted into a socket, so that the oil pan 40 is stably placed on the fixed rod. Similarly, the thermal insulation net 30 is installed in the same way. The rack 20 can be directly placed on an oil pan 40, eliminating the need for a separate fixing rod to secure it. Of course, referring to other fixing method, the thermal insulation net 30, the rack 20, the rib frame 10 and the oil pan 40 can also be installed and fixed by placing them in a groove set in the cavity wall of the thermal insulation inner cavity 1000A. The fixing method is not limited. It can be understood that the use of the thermal insulation net 30, the rack 20, and the rib frame 10 can be adaptively changed according to specific usage scenarios, including but not limited to individual use or choosing any combination of the two. The combination form is not limited. It should be noted that when any one or more of the thermal insulation net 30, the rack 20, and the rib frame 10 are used, a corresponding oil pan 40 needs to be provided beneath each of them to prevent the risk of backfire caused by food grease dripping.

The above are only some embodiments of the present application, and do not limit the scope of the present application. Under the concept of the present application, any equivalent structural transformations made by using the description and accompanying drawings of the present application, or direct/indirect application in other related technical fields, are included in the scope of the present application.

## Claims

1. A rack (20), **characterized by** comprising:
a limit plate (201); and
a support (202) connected with the limit plate (201);
wherein the limit plate (201) is provided with a plurality of limit notch grooves (20a), and the plurality of the limit notch grooves (20a) are arranged along a length direction of the limit plate (201); the limit notch grooves (20a) are configured to pass through the limit plate (201), and configured to limit and stabilize food.

2. The rack (20) according to claim 1, wherein a groove width of any of the limit notch grooves (20a) is configured to increase uniformly toward a notch of the limit notch grooves (20a) along a width direction of the limit plate (201).

3. The rack (20) according to claim 1, wherein the limit plate (201) is provided with a limit clamping tooth, and the limit clamping tooth is spaced on a side wall of the limit notch grooves (20a).

4. The rack (20) according to claim 1, wherein the limit plate (201) is also provided with a plurality of limit holes (20b), each of the limit holes (20b) is configured to correspond to one limit notch groove (20a) and is arranged on one side of the limit notch groove (20a) away from the limit notch groove (20a), and the limit hole (20b) is in communication with the limit notch groove (20a).

5. The rack (20) according to claim 1, wherein the rack (20) is provided with a rotating component (204) arranged at both ends of the limit plate (201) along the length direction of the limit plate (201), and the rotating component (204) is provided with rotating holes (20c); an end of the support (202) is provided with rotating rods (205), and each rotating rod (205) is inserted into each rotating hole (20c); an end of the support (202) away from the limiting plate is configured to form a free end; and
the rack (20) has a storage state and a support state; in the storage state, the free end is attached to the limit plate (201); in the support state, the free end is away from the limit plate (201).

6. The rack (20) according to claim 5, wherein the limit plate (201) is provided with a limit component (206), the limit component (206) is connected with the rotating component (204) and is provided with a limit space (206c) to accommodate at least part of the support (202); and
in the support state, the support (202) is abutted against the limit component (206).

7. The rack (20) according to any one of claims 1 to 6, further comprising:
a rib frame (10) independently arranged with respect to the rack (20);
wherein the rib frame (10) is provided with a bent rib rod (101) and a connecting rod (102), and the bent rib rod (101) is provided with two sets of bending components; one set of the bending components comprises a first bending component (103) and a second bending component (104); the first bending component (103) and the second bending component (104) are arranged at intervals at a non-end segment of the bend rib rod, and the two sets of bending components are symmetrically arranged on the bend rib rod; the bend rib rod is configured to form a first limit component (106), a second limit component (107), and a connecting component (108), and the first limit component (106) is parallel to the second limit component (107); and
a plurality of bent rib rods (101) are arranged at intervals on the connecting rod (102), and a clamping space is formed between any two adjacent bent rib rods (101).

8. The rack (20) according to claim 7, wherein the bend rib rod also comprises a third bending component (105) close to an end of the bend rib rod, and the third bending component (105) is configured to bend the end of the bend rib rod towards the first limit component (106).

9. A barbecue grill (1000), **characterized by** comprising:
a thermal insulation inner cavity (1000A) formed by an enclosure of a housing; and
the rack (20) according to any one of claims 1 to 8;
wherein the rack (20) is arranged in the thermal insulation inner cavity (1000A), and the housing has a first state and a second state; in the first state, the housing is configured to cover the thermal insulation inner cavity (1000A); in the second state, the housing is configured to reveal the thermal insulation inner cavity (1000A).

10. The barbecue grill (1000) according to claim 9, further comprising:
an oil pan (40), wherein the oil pan (40) is arranged in the thermal insulation inner cavity (1000A), and the rack (20) is located above an orthograph of the oil pan (40).

11. The barbecue grill (1000) according to claim 10, further comprising:
a thermal insulation net (30), wherein the thermal insulation net (30) is arranged in the thermal insulation inner cavity (1000A), and the thermal insulation net (30) is located above the orthograph of the oil pan (40).
